# EUROPEAN PATENT APPLICATION

(11) **EP 3 493 060 A1**
(43) Date of publication of application: **05.06.2019**
(21) Application number: 17204624.5
(22) Date of filing: 30.11.2017
(51) Int. Cl.: G06F 11/14

(54) **METHOD AND ELECTRONIC DEVICE FOR OPERATING A FLASH-BASED FILE SYSTEM**

(71) Applicant: Vestel Elektronik Sanayi ve Ticaret A.S., 45030 Manisa (TR)
(72) Inventor: DÖMEKELI, Erhan, 45030 Manisa (TR)
(74) Representative: Thomas, Michael Andrew

(57) **Abstract**

There is provided a method (30-70) for operating a file system using flash memory (20) to provide persistent storage. The method (30-70) comprises, following a loss of power (10):
(i) reading a portion of a file (35, 40, 45) in the file system; and
(ii) if (50) all data bits in the portion have the same value, triggering a process (55) to restore the file or the portion of the file from a stored copy of the file or of the portion of the file respectively. The method (30-70) may be applied for example to NOR SPI flash-based file systems in which, at (ii), restoration of the file or portion is triggered if all bits in the portion are set to '0'. There is also provided an electronic device having a data processing arrangement (1) operating a flash-based file system by this method.

## Description

### Technical Field

The present disclosure relates to a method for operating a flash-based file system and an electronic device.

### Background

It is common for embedded processing systems to use file systems based upon solid-state non-volatile flash memory with a serial peripheral interface (SPI) compatible interface. SPI flash-based file systems are commonly used in mobile phones, digital cameras, laptop and tablet computing devices, etc. and when using SD cards or USB memory sticks.

Two commonly used types of flash memory are NOR and NAND-based flash memory. Each type may be divided into partitions and the partitions may be divided into blocks, for example of 64KB or 128 KB. Example flash file systems suitable for use with flash memory devices include the YAFFS and F2FS file systems as may be included in a Linux operating system kernel.

It is known to provide flash file system recovery facilities to help overcome the problem of data loss or file system damage in the event of a power loss. In particular, CN 101477482 A describes a method for recovering a flash file system to a default configuration following file system damage due to a power-down in an embedded Linux system.

### Summary

According to a first aspect disclosed herein, there is provided a method for operating a file system using flash memory to provide persistent storage, comprising:
(i) reading a portion of a file in the file system; and
(ii) if all data bits in the portion have the same value, triggering a process to restore the file or the portion of the file from a stored copy of the file or of the portion of the file respectively.

This method may be operated for example following an unexpected power loss suspected of corrupting one or more files in the file system due to the way in which flash memory devices are managed in a flash-based file system

In an example, the method comprises:
(iii) repeating (i) and (ii) for other files in the file system.

In this way, some or all the files in the file system may be checked and, if necessary, restored. Files may be restored from a back-up copy or other saved copy of the portion found to be corrupt or of the whole file. In some systems, it may be easier to restore a whole file if one portion is found to be corrupt, rather than restore only the portion from a stored copy.

In an example, the flash memory comprises NOR SPI flash memory and (ii) comprises, if all data bits in the portion have the value '0', triggering a process to restore the file or the portion of the file from a stored copy of the file or of the portion of the file respectively. The particular requirement in NOR flash memory devices for all bits to be set to '0' before an erase process can take place increases the probability that a file may be corrupted if there is an unexpected loss of power during a write operation. However, this also provides a way to detect file corruption as it would not otherwise be expected to find a whole portion of a file containing '0' bits.

In an example, the method is implemented within an operating system of a data processing arrangement. For example, the file checking and restoration functionality may be implemented as part of the file system functionality provided by an operating system.

According to a second aspect disclosed herein, there is provided an electronic device having a data processing arrangement implementing a file system based upon flash memory for persistent data storage, the data processing arrangement being configured, following a loss of power, to:
(i) read a portion of a file in the file system; and
(ii) if all data bits in the portion have the same value, to trigger a process to restore the file or the portion of the file from a stored copy of the file or of the portion of the file respectively.

In an example of the electronic device, the data processing arrangement is configured to:
(iii) repeat (i) and (ii) for other files in the file system.

In an example of the electronic device, the flash memory comprises NOR SPI flash memory and the data processing arrangement is configured, at (ii), if all data bits in the portion have the value '0', to trigger a process to restore the file or the portion of the file from a stored copy of the file or of the portion of the file respectively.

In an example of the electronic device, the data processing arrangement comprises an operating system configured to implement (i) and (ii).

In an example of the electronic device, the data processing arrangement comprises an operating system configured to implement (i), (ii) and (iii).

In an example, the electronic device comprises a power management system configured to implement (i) and (ii).

In an example, the electronic device comprises a power management system configured to implement (i), (ii) and (iii).

In an example of the electronic device, the flash memory comprises NAND flash, solid state disk or embedded multi-media controller flash.

### Brief Description of the Drawings

To assist understanding of the present disclosure and to show how embodiments may be put into effect, reference is made by way of example to the accompanying drawings in which:
Figure 1 shows schematically a data processing arrangement for operating a file system based upon flash memory, according to examples disclosed herein; and
Figure 2 shows a flow chart for a file checking a restoration process according to examples disclosed herein.

### Detailed Description

Examples to be described below provide a method for identifying and recovering individual damaged files in a file system using SPI flash memory, that is, NOR flash memory with a serial interface compliant with the serial peripheral interface (SPI) standard. However, examples to be described below may also be applied to file systems using NAND flash memory, as will be discussed further below.

Known flash-based file system recovery facilities, for example those provided for use with a Linux file system, concentrate on recovering the file system where the file system has been damaged following a power loss. However, they do not take account of the possibility of individual files becoming corrupted as a result of a power loss, in particular those being maintained in SPI flash memory. One result of this is that the associated data processing system may become unstable as the Linux file system does not recognise that particular files may have become corrupted, so long as the file system itself is not corrupted or has been successfully restored.

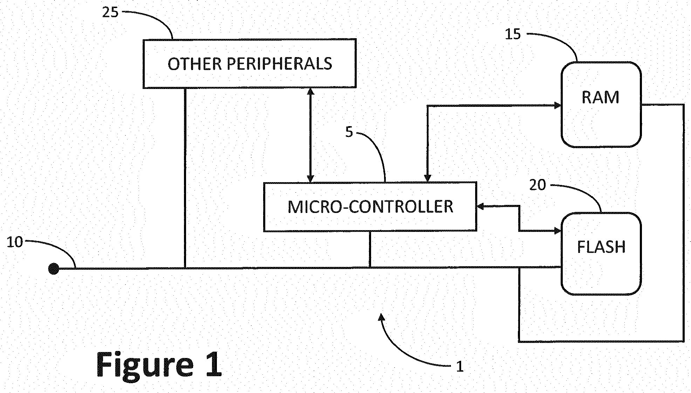

A typical embedded data processing arrangement to which examples to be described herein may be applied will firstly be described with reference to Figure 1.

Referring to Figure 1, an embedded data processing arrangement 1 comprises a micro-controller 5 configured to execute data processing functionality required in a host device. The micro-controller 5 receives power over a supply line 10 and uses two types of memory: random access memory (RAM) 15 for transient data storage; and flash memory 20 for persistent data storage and, in particular, to provide persistent storage for a file system maintained in the arrangement 1. The file system stored in the flash memory 20 may be administered by functionality implemented in the micro-controller 5. Furthermore, interaction with the particular choice of SPI flash memory devices used to provide the flash memory 20 may also be managed by functionality implemented in the micro-controller 5. The micro-controller 5 is arranged also to interwork with other peripheral devices 25 of the arrangement 1 which, in a mobile phone for example may include a display, one or more cameras, inertial sensors and communications interfaces, etc.

File systems using SPI flash memory devices 20, for example as may be provided with operating systems such as Linux, require more complex device management functionality than is required for other types of storage, such as RAM 15. For example, when writing data to a flash memory device, a bit may be changed from a '1' to a '0', but if a '0' is to be changed to a '1', the whole of the respective block, of 64 KB or 128 KB for example, must firstly be erased, setting all bits in the block to a '1'. This necessarily involves firstly saving all the valid data in the block if it is not to be lost.

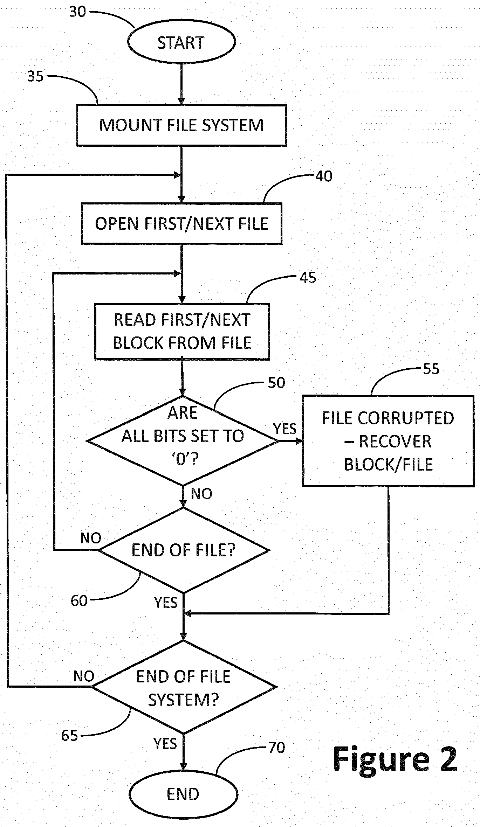

However, in a NOR SPI flash memory device, the process of erasing a block requires an initial step of setting all the bits in the block to '0' before the erase operation itself can begin. This initial step is relatively time consuming. If an unexpected power loss occurs during this period, it may be found that all the bits in a block have unexpectedly become '0'. The more frequently a file is written to, the greater the probability of such a condition arising due to an incomplete write operation. This condition may be used, according to examples disclosed herein, as an indicator that a file has suffered corruption and that the respective blocks require restoration. A block having a mix of '1's and '0's is unlikely to have been corrupted by a power loss due to the persistence of flash memory. An example procedure for checking a file system and restoring damaged files following an unexpected power loss will now be described with reference to Figure 2.

Referring to Figure 2, a flow chart is provided of an example of a process for checking and restoring files. The process may be triggered at 30 when power is restored after an unexpected power loss. At 35, the file system is mounted and, assuming it is not itself corrupted, the processes continues at 40 by opening a first writable file in the file system and at 45, reading the first block of the file from the flash memory 20.

If, at 50, it is found by examination that all bits in the block have become set to '0' then, at 55, it is determined that at least that block has become corrupted due to the power loss through an incomplete write operation. A process may then be triggered for the micro-controller to recover the block or the whole of the file from a most recent back-up copy and to store it in the flash memory 20. In practice it may be easier to recover a whole file if a corrupted block is identified than to recover an individual block. However, if available, a saved copy of the block may be restored at 55 to the flash memory 20 and, after restoration of the block, the process may instead continue at 60 to check for the end of the file.

If, at 45, not all bits of the block at set to '0', then it is assumed that the block is not corrupted and processing continues to 60 to check whether the end of the file has been reached. If, at 60, the end of the file has not been reached, then processing returns to 45 to read the next block in the file. Otherwise, at 65, a check for the end of the file system is made and, if all the writable files in the file system have been checked, the process ends at 70. Otherwise, processing returns to 40 to open the next file held in the file system.

The example described above for use with NOR SPI flash memory may also be used to detect and restore corrupted files in file systems using, for example, NAND flash, solid-state disk or embedded multi-media controller (eMMC) flash, as would be apparent to a person of ordinary skill in the relevant art. For example, if applied for use with NAND flash, the process shown in Figure 2 may be adapted by checking, at 50, whether all bits have been set to '1'.

The process described above is applicable in file systems and with flash memory devices using block sizes other than 64KB or 128KB. The term 'block', as used above, is intended to refer to the smallest unit of non-volatile memory that can be erased or written to in one operation. Other terms are used to refer to units of storage for other types of flash memory, for example the terms 'sector' and 'page'. The process in Figure 2 may be applied to such sector or page-based file systems as would be apparent to the skilled person in this art.

Reference has been made above to Linux file systems. However, the examples described above are intended for application to file systems implemented in other types of operating system.

The embedded data processing arrangement referred to above, and as shown in Figure 1, is only one example of the type of data processing arrangement to which examples disclosed herein may be applied. Furthermore, the process described above with reference to Figure 2 may be implemented as a function of an operating system executing on the micro-controller 5 or as a stand-alone application executed by the micro-controller 5 or by another suitably configured data processing device other than the micro-controller 5 with access to a flash-based file system to be checked and restored. The functionality described above may alternatively be implemented as a function of a power management system in an electronic device.

The micro-controller 5 or other data processor for implementing examples described above may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method (30-70) for operating a file system using flash memory (20) to provide persistent storage, comprising:
(i) reading a portion of a file (35, 40, 45) in the file system; and
(ii) if (50) all data bits in the portion have the same value, triggering a process (55) to restore the file or the portion of the file from a stored copy of the file or of the portion of the file respectively.

2. The method (30-70) according to claim 1, comprising:
(iii) repeating (i) and (ii) for other files in the file system.

3. The method (30-70) according to claim 1 or claim 2, wherein the flash memory (20) comprises NOR SPI flash memory and (ii) comprises, if all data bits in the portion have the value '0', triggering a process (55) to restore the file or the portion of the file from a stored copy of the file or of the portion of the file respectively.

4. The method (30-70) according to any one of claims 1 to 3, wherein the method (30-70) is implemented within an operating system of a data processing arrangement (1).

5. An electronic device having a data processing arrangement (1) implementing a file system based upon flash memory (20) for persistent data storage, the data processing arrangement (1) being configured, following a loss of power (10), to:
(i) read a portion of a file (35, 40, 45) in the file system; and
(ii) if (50) all data bits in the portion have the same value, to trigger a process (55) to restore the file or the portion of the file from a stored copy of the file or of the portion of the file respectively.

6. The electronic device according to claim 5, wherein the data processing arrangement (1) is configured to:
(iii) repeat (i) and (ii) for other files in the file system.

7. The electronic device according to claim 5 or claim 6, wherein the flash memory (20) comprises NOR SPI flash memory and the data processing arrangement (1) is configured, at (ii), if all data bits in the portion have the value '0', to trigger a process (55) to restore the file or the portion of the file from a stored copy of the file or of the portion of the file respectively.

8. The electronic device according to any one of claims 5 to 7, wherein the data processing arrangement (1) comprises an operating system configured to implement (i) and (ii).

9. The electronic device according to claim 6, wherein the data processing arrangement (1) comprises an operating system configured to implement (i), (ii) and (iii).

10. The electronic device according to any one of claims 5 to 7, comprising a power management system configured to implement (i) and (ii).

11. The electronic device according to claim 6, comprising a power management system configured to implement (i), (ii) and (iii).

12. The electronic device according to any one of claims 5, 6, 9 or 11, wherein the flash memory (20) comprises NAND flash, solid state disk or embedded multi-media controller flash.
